(19) Europäisches Patentamt
European Patent Office
Office européen des brevets

(11) EP 1 878 763 A2

(12) EUROPEAN PATENT APPLICATION

(43) Date of publication:
**16.01.2008 Bulletin 2008/03**

(51) Int Cl.:
***C08K 7/24*** *(2006.01)* ***C08K 5/00*** *(2006.01)*
***C08J 3/20*** *(2006.01)*

(21) Application number: **07252182.6**

(22) Date of filing: **26.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **21.06.2006 US 472699**

(71) Applicant: **Lin, Kuan-Jiuh**
**Taichung City (TW)**

(72) Inventors:
- **Lin, Kuan-Jiuh**
  **Taichung City (TW)**
- **Su, Jun-Wei**
  **Chiya-Yi City (TW)**

(74) Representative: **Brown, Michael Stanley**
**Alpha and Omega,**
**Chine Croft,**
**East Hill**
**Ottery St. Mary,**
**Devon EX11 1PJ (GB)**

(54) **CNT/polymer composite and method for producing the same**

(57) The present invention provides a CNT/polymer composite, in which properties of the polymer is modified and improved. The present invention also relates to a method for producing the CNT/polymer composite.

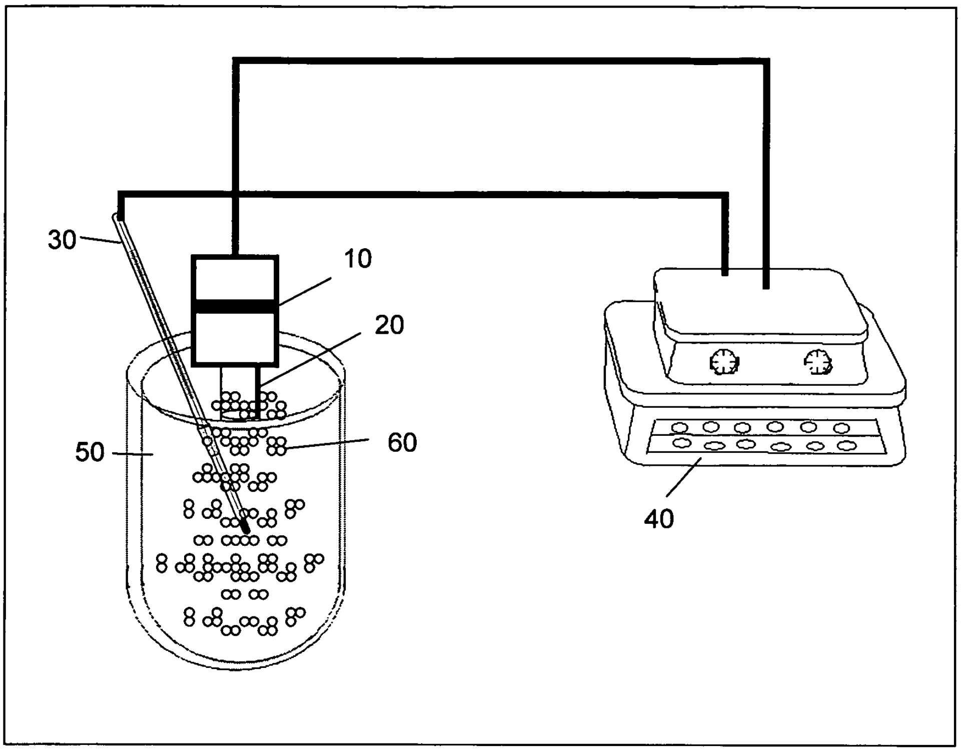


FIG. 1

EP 1 878 763 A2

## Description

### BACKGROUND OF THE INVNETION

1. Field of the Invention

The present invention relates to a CNT/polymer composite, in which properties of the polymer is modified and improved by the CNT (carbon nanotubes). The present invention also relates to a method for producing the CNT/polymer composite.

2. Related Prior Art

Carbon nanotubes (CNT) play a very important role in modifying traditional materials which perform poor characteristics such as electrical conductivity.

U.S. Patent No. 7,056,452 discloses "Polyvinylidene fluoride composites and methods for preparing same". The PVDF composites are prepared by dissolving the PVDF polymer in a first solvent to form a polymer solution and then adding the carbon nanotubes into the solution. The solution is mixed using an energy source such as a sonicator or a Waring blender. A precipitating component is added to precipitate out a composite comprising the polymer and the nanotubes. The composite is isolated by filtering the solution and drying the composite.

Though the conductivity is improved in the above disclosure, however, an organic solvent such as ketone or tetrahydrofuran has to be uses and thus may result in pollution. In addition, the post-treatment to isolate the composite is complex.

Accordingly, it's desired to develop a technology of modifying polymers with the CNT and thus improve characteristics thereof.

### SUMMARY OF THE INVENTION

The main object of the present invention is to provide a CNT/polymer composite and a method for producing the same, so that the polymer can be modified with CNT and characteristics thereof can be improved.

In the present invention, the method for producing the CNT/polymer composite comprises a step of: mixing CNT, polymers and a surfactant in water with high-speed oscillation to form a CNT/polymer composite solution.

Preferably, the CNT and the surfactant are previously mixed in water to form a CNT dispersion, and then the polymer is mixed therein. More preferably, the surfactant is previously dissolved in water to form a solution of the surfactant, and then the CNT is mixed in the solution to form the CNT dispersion.

The surfactant used in the present invention is preferably an anionic surfactant, for example, alkyl sulfonate, alkyl benzene sulfonate, alkyl sulfate or alkyl benzene sulfate. More examples of the anionic surfactant include sodium hexyl sulphonate, sodium heptyl sulphonate, sodium oxtyl sulphonate, sodium dodecyl sulphonate, sodium nonadecyl sulphonate, sodium eicosyl sulphonate, sodium hexyl benzene sulphonate, sodium heptyl benzene sulphonate, sodium oxtyl benzene sulphonate, sodium dodecyl benzene sulphonate, sodium nonadecyl benzene sulphonate, sodium eicosyl benzene sulphonate, calcium hexyl sulphonate, calcium heptyl sulphonate, calcium oxtyl sulphonate, calcium dodecyl sulphonate, calcium nonadecyl sulphonate and calcium eicosyl sulphonate. Among these surfactants, sodium dodecyl sulphonate (SDS) is preferred, which preferably has a concentration about 1~0.1 wt% in the aqueous solution; and the weight ratio of SDS: CNT is preferably 0.1: 1~100: 1, more preferably 0.2: 1~5: 1.

In the present invention, the polymer for modified can be any proper polymers, and preferably has a molecular weight ranging 1,000~4,000,000 and is selected from the group consisting of:

polyvinyl alcohol (PVA)

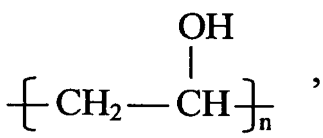

polyacrylic acid

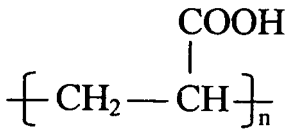
,

sodium polyacrylic acid

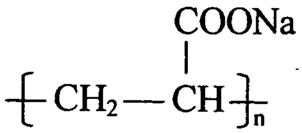
,

polyacrylamide

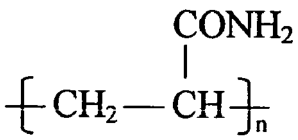
,

poly(sodium 4-styrenesulfonate)

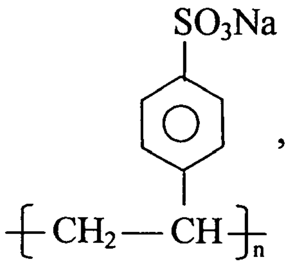
,

and

a mixture of polyvinyl alcohol and borax ($Na_2B_4O_7$) in a molar ratio of 1:1;

wherein n is an integer larger than 1.
and more preferably polyvinyl alcohol (PVA). Preferably, the weight ratio of PVA: CNT ranges 1.5: 1~10,000: 1, and the molecular weight of PVA preferably ranges 1,000 ~200,000.

The CNT/polymer composite solution obtained in the above procedure can be further dried to form a solid CNT/ polymer composite.

Preferably, the mixing procedure is operated in an ultrasonic oscillator, and preferably operated intermittently and/or in a probe-type ultrasonic oscillator.

In the present invention, the polymers can be further classified into water-soluble polymers and target polymers, wherein the CNT is first mixed with water-soluble polymers before mixed with the target polymer.

The water-soluble polymers can be polyethylene glycol, polyethylene oxide, polvinyl pyrrolidone, water soluble epoxy ester resin, water soluble pheno resin, water soluble amino resin, melamine-formaldehyde resin, water soluble alkyd resin, water soluble polyurethane, polymetasicate, sodium alginate, arabic gum, carboxymethyl cellulose, methyl cellulose, ethyl cellulose, hydroxyethyl cellulose, hydroxypropyl cellulose, hydroxyethyl methyl cellulose, hydropropyl

methyl cellulose, hydroxybutyl methyl cellulose, hydroxymethyl hydroxyethyl cellulose, sulfonic ethyl cellulose or cyanoethyl cellulose, or a mixture thereof.

The target polymers can be epoxy, polychlorobutadine rubber, poly(vinyl formal) (PVFM) or poly(vinyl acetate) (PVAc).

## BRIEF DESCRIPTION OF THE DRAWINGS

FIG 1 shows a probe-type ultrasonic oscillator used in the embodiments.
FIG. 2 shows states of the CNT/PVA solutions obtained in Examples 1&6, Comparative Examples 1~3.
FIG. 3 shows states of the CNT/PVA solutions obtained in Example 1~5.
FIG. 4 shows UV absorbance of the CNT/PVA solutions obtained in Examples 2~5.
FIGs. 5~10 show linear relationships of UV absorbance and concentrations of the CNT obtained in Examples 2~5.
FIG. 11 shows the CNT/PVA film obtained in Example 1.
FIGs. 12 and 13 show SEM pictures of the film.
FIG. 14 shows SEM pictures of the film etched with plasma after forming an Au film by sputtering deposition.
FIG. 15 shows a scheme for measuring resistance of the CNT/PVA film.
FIG. 16 illustrates conductivities of the CNT/PVA films.
FIGs. 17~19 show the TGA curves of the CNT/PVA composite.
FIG. 20 shows final residuals of the CNT/PVA composites.
FIGs. 21 and 22 show SEM pictures of the burned CNT/PVA composite.

## DETAILED DESCRIPTION OF THE PREFERRED EMBODIMENTS

To clearly describe the present invention, procedures of some preferred embodiments are exemplified with the drawings. FIG 1 shows a probe-type ultrasonic oscillator for mixing CNT, a surfactant and polymers, which includes an oscillator 10, a Ti probe 20, a controller 30 and a thermocouple 40. Once the oscillator starts, the solution 50 will generate bubbles 60.

In the Examples and Comparative Examples, Sodium dodecyl sulphonate (SDS) and polyvinyl alcohol (PVA) are respectively used as the surfactant and polymers to be modified.

<u>Example 1</u>

(a) Preparing the CNT dispersion

SDS (50 mg) is dissolved in water to form an aqueous solution (50mL) and then added into a round-bottom tube in which CNT (12.5 mg) is contained. These materials are then mixed with a probe-type ultrasonic oscillator for 1~20 minutes to form a CNT dispersion. Operation conditions of the oscillator are as follows:

Frequency: 20KHz
rated power: 750W
operation strength: 20%~40%
temperature: 25°C .

The mixture is then cooled to room temperature and a uniform CNT dispersion is achieved.

(b) Modifying the polymer

PVA (12.5g, molecular weight (m.w.) 18,000~20,000) is dissolved in water to form a 10 wt% solution into which the CNT dispersion is then added and agitated in the ultrasonic oscillator for 3 minutes, and finally a uniform CNT/PVA composite solution with a weight ratio of PVA: CNT = 1,000: 1 (or 10,000: 10) is obtained.

(c) Forming a CNT/PVA composite film

The CNT/PVA composite solution is then coated on a substrate with the dip-coating method, and dried in an oven to form a CNT/PVA composite film.

Examples 2~5

The procedures of Example 1 are repeated, but different amounts of the PVA solution are added to obtain solutions with weight ratios of PVA: CNT = 10,000: 1, 10,000: 2, 10,000: 3 and 10,000: 5.

Example 6

The procedures of Example 1 are repeated, but the PVA (12.5g) is added into water together with SDS.

Examples 7~9

The procedures of Example 1 are repeated, but PVA (m.w. 6,000~8,000), PVA (m.w. 60,000) and PVA (m.w. 80,000) instead of PVA (m.w. 18,000~20,000) are respectively added.

Examples 10~22

The procedures of Example 1 are repeated, but the CNT, SDS and PVA are added in ratios as listed in Table 1.

Table 1

| Examples | CNT | SDS | PVA | CNT (wt%) |
|---|---|---|---|---|
| 10 | 0.001 | 0.01 | 999.989 | 0.0001 |
| 11 | 0.01 | 0.1 | 999.89 | 0.001 |
| 12 | 0.1 | 1 | 998.9 | 0.01 |
| 13 | 1 | 10 | 989 | 0.1 |
| 14 | 10 | 10 | 980 | 1.0 |
| 15 | 20 | 10 | 970 | 2.0 |
| 16 | 25 | 15 | 960 | 2.5 |
| 17 | 50 | 25 | 925 | 5.0 |
| 18 | 75 | 25 | 900 | 7.5 |
| 19 | 100 | 25 | 875 | 10 |
| 20 | 200 | 50 | 750 | 20 |
| 21 | 300 | 50 | 650 | 30 |
| 22 | 400 | 100 | 500 | 40 |
| 23 | 500 | 100 | 400 | 50 |

Comparative Example 1

The procedures of Example 1 are repeated, but no SDS is added.

Comparative Example 2

The procedures of Example 1 are repeated, but the probe-type ultrasonic oscillator is replaced with a mechanical agitator and operated for 120 minutes.

Comparative Example 3

The procedures of Example 1 are repeated, but the probe-type ultrasonic oscillator is replaced with a tank-type ultrasonic oscillator and operated for 120 minutes.

Observations of the CNT/PVA composite solutions

FIG. 2 shows states of the CNT/PVA solutions obtained in Examples 1&6, Comparative Examples 1~3 (respectively marked as A, B, C, D and E); wherein Example 1 performs the best dispersing state. Comparative Examples 1~3, particularly Comparative Examples 2&3, present lighter color, i.e., the CNT is hardly dispersed in PVA.
FIG. 3 shows states of the CNT/PVA solutions obtained in Example 1~5, wherein a pure PVA solution with molecular weight 20,000 is marked as "A" and colors of the solutions become darker with increasing of concentrations.
The CNT/PVA solutions obtained in Examples 7~9 present different viscosities, which indicates that molecular weight of polymers is not restricted as long as amount of water and temperature are properly controlled to be suitable for operation in the probe-type ultrasonic oscillator.

UV analysis of CNT/PVA solutions

FIG. 4 shows UV absorbance of the CNT/PVA solutions obtained in Examples 2~5, which are almost the same after three months.
FIGs. 5~10 show linear relationships of UV absorbance and concentrations of the CNT obtained in Examples 2~5 at wavelengths 250nm, 300nm, 350nm, 500nm, 700nm and 800nm. As shown in the figures, correlation coefficients (R) are all higher than 0.9998.

SEM analysis of the CNT/PVA film

FIG. 11 shows the CNT/PVA film obtained in Example 1. FIGs. 12 and 13 show SEM pictures of the film in different magnifications, wherein the film is etched with plasma and both figures indicate that the CNT is indeed uniformly distributed in PVA.
FIG. 14 shows SEM pictures of the film etched with plasma after forming an Au film by sputtering deposition, in which (a)~(f) have different magnifications. The protrusion on the center of picture (a) indicates where the electron beams with high energy (15kV) focus on and bums into the polymer to expose the CNT (lines as shown in the figure).

Electricity analysis of CNT/PVA film

FIG. 15 shows a scheme for measuring resistance of the CNT/PVA film weighing 3.2 mg and sizing 2.5cm×7.5cm. An equation as follows is applied.

$$R = \frac{1}{\sigma} \times \frac{L}{A}$$

wherein R is resistance (Ω), σ is electrical conductivity, A is cross area, and L is the length. The resistance of the film is calculated as 4.481 MΩ, which indicates that merely some CNT obtained in the present invention can modify insulated polymers to conductive polymers.
Conductivities of the CNT/PVA films with different CNT contents obtained in Examples 10~15, 17, 19~21 are listed in Table 2 and shown in FIG. 16, which can be compared with conductivities of some metals and nonmetals as listed in Table 3.

Table 2

| Examples | CNT (wt%) | Conductivity $(\Omega\bullet m)^{-1}$ |
|---|---|---|
| 21 | 30 | 1,500,000 |
| 20 | 20 | 50,000 |
| 19 | 10 | 35,714 |
| 17 | 5 | 11,364 |
| 15 | 2 | 9,615 |

(continued)

| Examples | CNT (wt%) | Conductivity $(\Omega\cdot m)^{-1}$ |
|---|---|---|
| 14 | 1 | 3,289 |
| 13 | 0.1 | 1,120 |
| 12 | 0.01 | 167 |
| 11 | 0.001 | 1.6 |
| 10 | 0.0001 | 0.65 |

Table 3

| Metal/alloy | Conductivity $(\Omega\cdot m)^{-1}$ | Nonmetal | Conductivity $(\Omega\cdot m)^{-1}$ |
|---|---|---|---|
| Ag | $6.3\times10^{7}$ | Ge | 2.2 |
| Cu[a] | $5.8\times10^{7}$ | Si | $4.3\times10^{-4}$ |
| AU | $4.2\times10^{7}$ | Polyethylene | $1\times10^{-14}$ |
| Al[a] | $3.4\times10^{7}$ | Polystyrene | $1\times10^{-14}$ |
| | | Diamond | $1\times10^{-14}$ |
| [a] commercial purity | | | |

Flame Retardant

For unmodified PVA, thermal decomposition temperature (TDT) is 200°C. However, the CNT/PVA composite performs much higher TDT as shown in TGA curves of FIGs. 17~19. The temperature is increased at a gradient 10°C/min up to 900 °C and then kept for one hour. FIGs. 17 and 18 indicate that the composites with lower (0~10%) and higher (20~60%) CNT contents can effectively promote residuals at 400°C. FIG. 19 indicates that the composites with different CNT contents (0.1~60%) can also effectively promote residuals at 900°C.

FIG. 20 shows final residuals of the CNT/PVA composites with different CNT contents obtained in Examples 14 & 16~23, and Table 4 lists these data. The temperature is increased at a gradients 2°C/min up to 400°C then kept for one hour, and naturally cool down to room temperature.

Table 4

| Examples | CNT (wt%) | Residual (%) |
|---|---|---|
| -- | 0 | 9.5 |
| 14 | 1.0 | 16.3 |
| 16 | 2.5 | 39.5 |
| 17 | 5.0 | 20.8 |
| 18 | 7.5 | 16.7 |
| 19 | 10 | 46.5 |
| 20 | 20 | 21.5 |
| 21 | 30 | 34.8 |
| 22 | 40 | 41.5 |
| 23 | 50 | 54.5 |

FIGs. 21 and 22 show SEM pictures of the burned CNT/PVA composite containing 5 wt% of CNT.

Examples for CNT/other polymers

Different from PVA used in the above Examples, other polymers are modified via different procedures. In these Examples, water soluble polymers are first mixed with CNT in the probe-type ultrasonic oscillator with similar operation conditions, and then target polymers are mixed therein by means of a traditional agitator such as a three-roller machine or a deaerator. In these Examples, the water soluble polymers is polyethylene glycol, and the target polymers are respectively epoxy, polychlorobutadine rubber, poly(vinyl formal) (PVFM) and poly(vinyl acetate) (PVAc).

Heat Distortion of the CNT/other polymers

The target polymers with different contents of CNT are burned at 100~300°C for 2 hours after heated for one hour from room temperature. The temperature ($T_{HD}$) for heat distortion of these target polymers are shown in Table 5.

Table 5

| CNT Content (wt %) / $T_{HD}$ (℃) / Target polymer | 0 | 0.01 | 0.05 | 0.50 | 1.00 | 2.00 |
|---|---|---|---|---|---|---|
| Epoxy | 120 | 140 | 170 | 200 | 220 | 250 |
| polychlorobutadine rubber | 80 | 90 | 100 | 120 | 150 | 170 |
| PVFM | 90 | 100 | 110 | 140 | 170 | 220 |
| PVAc | 70 | 70 | 80 | 120 | 130 | 160 |

Resistance of the CNT/other polymers

Table 6 lists results of the target polymers containing 1.00 wt% CNT and compared to their original resistance without CNT.

Table 6

| CNT Content (wt %) / Resistance (KΩ/m) / Target polymer | 0 | 1.00 |
|---|---|---|
| Epoxy | >1,000,000 | 2 |
| polychlorobutadine rubber | >1,000,000 | 7.5 |
| PVFM | >1,000,000 | 0.65 |
| PVAc | Unable to be shaped | |

According to the above tests, it's obvious that the flame retardant of polymers can be effectively promoted when modified with CNT.

## Claims

1. A method for producing a CNT/polymer composite, comprising a step of:

   mixing CNT (carbon nanotubes), polymers and a surfactant in water with high-speed oscillation to form a CNT/polymer composite solution.

2. The method of claim 1, wherein the CNT and the surfactant are previously mixed in water to form a CNT dispersion, and then the polymer is mixed therein.

3. The method of claim 2, wherein the surfactant is previously dissolved in water to form a solution of the surfactant, and then the CNT is mixed in the solution to form the CNT dispersion.

4. The method of claim 1, wherein the surfactant is selected from the group consisting of alkyl sulfonate, alkyl benzene sulfonate, alkyl sulfate and alkyl benzene sulfate.

5. The method of claim 4, wherein the anionic surfactant is sodium dodecyl sulphonate (SDS).

6. The method of claim 5, wherein the weight ratio of SDS: CNT is 0.1: 1~100: 1.

7. The method of claim 1, wherein the polymer has a molecular weight ranging 1,000~4,000,000 and is selected from the group consisting of:

   polyvinyl alcohol (PVA)

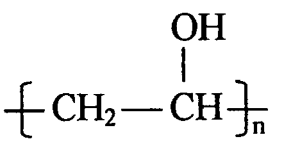

,

   polyacrylic acid

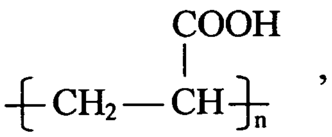

sodium polyacrylic acid

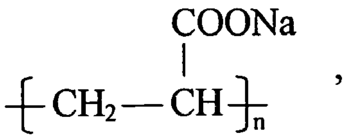

polyacrylamide

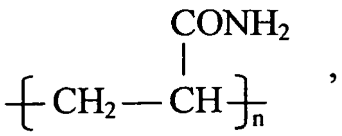

poly(sodium 4-styrenesulfonate)

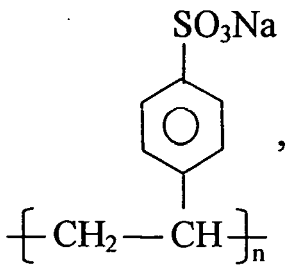

and
a mixture of polyvinyl alcohol and borax ($Na_2B_4O_7$) in a molar ratio of 1:1;

wherein n is an integer larger than 1.

**8.** The method of claim 1, wherein the polymer is polyvinyl alcohol (PVA).

**9.** The method of claim 10, wherein the weight ratio of PVA: CNT ranges 1.5: 1~10,000: 1.

**10.** The method of claim 10, wherein the molecular weight of PVA ranges 1,000~200,000.

**11.** The method of claim 1, further comprising a step:

drying the CNT/polymer composite solution to obtain a solid CNT/polymer composite.

**12.** The method of claim 1, wherein the mixing procedure is operated in an ultrasonic oscillator.

**13.** The method of claim 12, wherein the ultrasonic oscillator is a probe-type ultrasonic oscillator.

**14.** The method of claim 1, wherein the polymers comprise water-soluble polymers and target polymers, and the CNT is first mixed with water-soluble polymers before mixed with the target polymer.

**15.** The method of claim 15, wherein the water-soluble polymers are selected from the group consisting of polyethylene glycol, polyethylene oxide, polvinyl pyrrolidone, water soluble epoxy ester resin, water soluble pheno resin, water soluble amino resin, melamine-formaldehyde resin, water soluble alkyd resin, water soluble polyurethane, polymetasicate, sodium alginate, arabic gum, carboxymethyl cellulose, methyl cellulose, ethyl cellulose, hydroxyethyl cellulose, hydroxypropyl cellulose, hydroxyethyl methyl cellulose, hydropropyl methyl cellulose, hydroxybutyl methyl cellulose, hydroxymethyl hydroxyethyl cellulose, sulfonic ethyl cellulose and cyanoethyl cellulose, or a mixture thereof.

**16.** The method of claim 15, wherein the target polymers are selected from the group consisting of: epoxy, polychlorobutadine rubber, poly(vinyl formal) (PVFM) and poly(vinyl acetate) (PVAc).

**17.** A CNT/polymer composite, comprising a product obtained by mixing CNT, polymers and a surfactant in water with high-speed oscillation.

**18.** The CNT/polymer composite of claim 17, wherein the surfactant is selected from the group consisting of alkyl sulfonate, alkyl benzene sulfonate, alkyl sulfate and alkyl benzene sulfate.

**19.** The CNT/polymer composite of claim 17, wherein the surfactant is sodium dodecyl sulphonate (SDS).

**20.** The CNT/polymer composite of claim 19, wherein the weight ratio of SDS: CNT is 0.1: 1~100:1.

**21.** The CNT/polymer composite of claim 17, wherein the polymer has a molecular weight ranging 1,000~4,000,000 and is selected from the group consisting of:

polyvinyl alcohol (PVA)

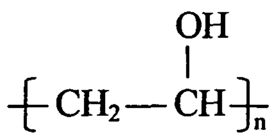
,

polyacrylic acid

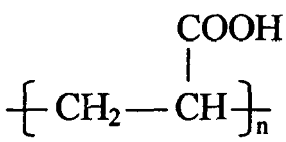
,

sodium polyacrylic acid

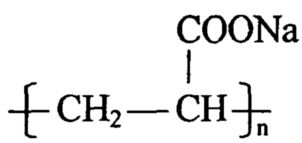
,

polyacrylamide

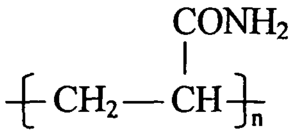,

poly(sodium 4-styrenesulfonate)

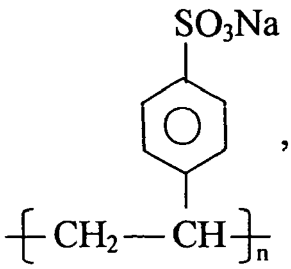,

and
a mixture of polyvinyl alcohol and borax ($Na_2B_4O_7$) in a molar ratio of 1: 1;

wherein n is an integer larger than 1.

**22.** The CNT/polymer composite of claim 17, wherein the polymer is polyvinyl alcohol (PVA).

**23.** The CNT/polymer composite of claim 22, wherein the weight ratio of PVA: CNT ranges 1.5: 1~10,000: 1.

**24.** The CNT/polymer composite of claim 22, wherein the molecular weight of PVA ranges 1,000~200,000.

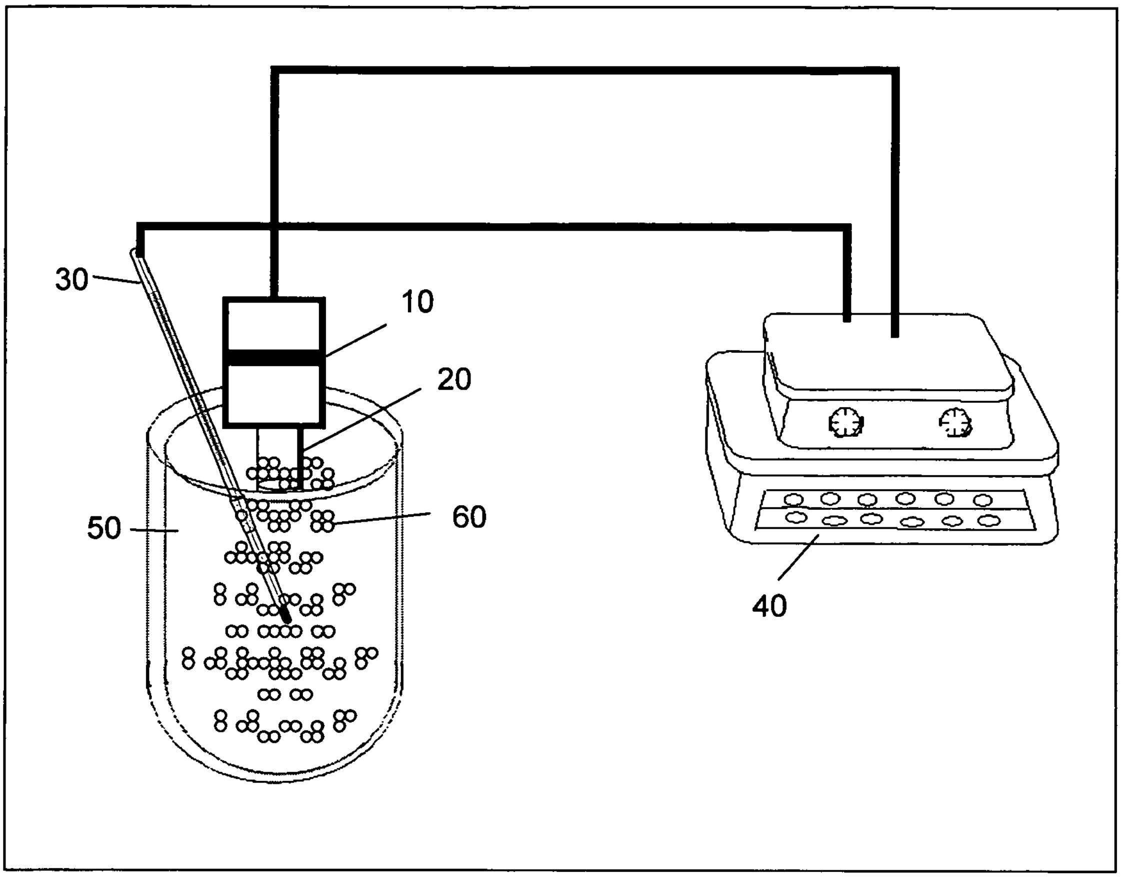


FIG. 1

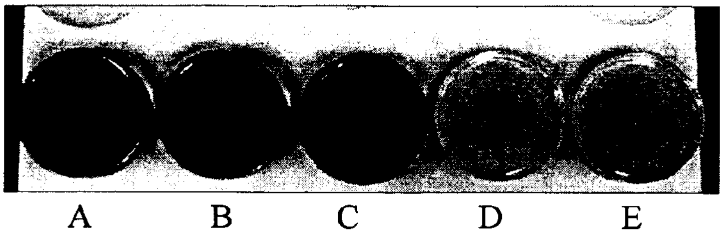


FIG. 2

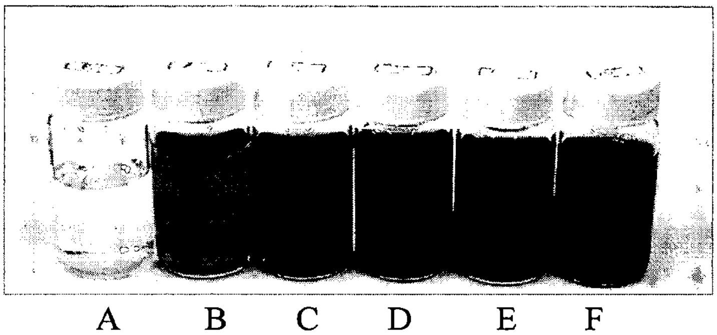


FIG. 3

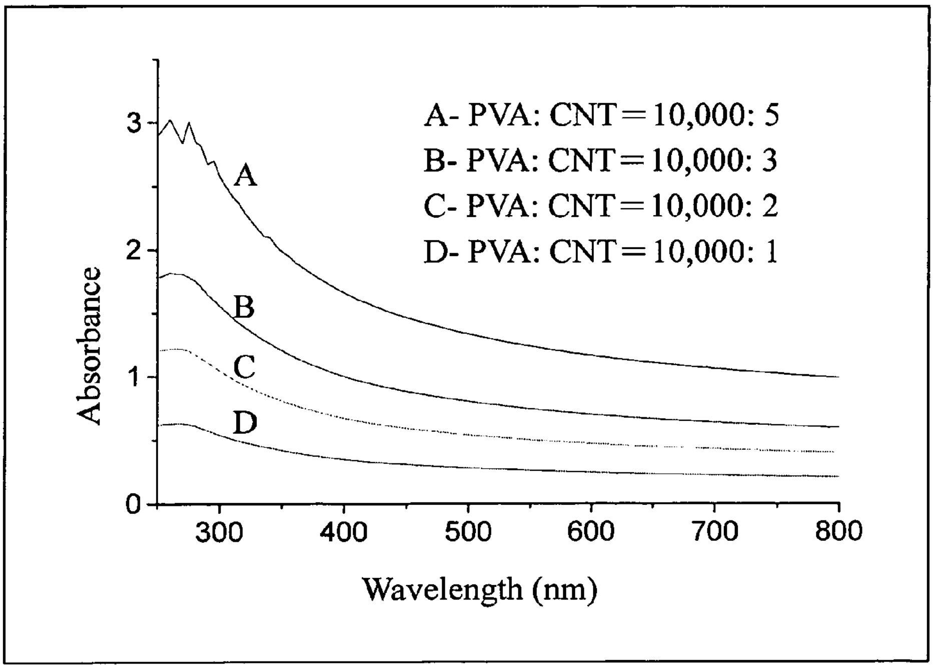


FIG. 4

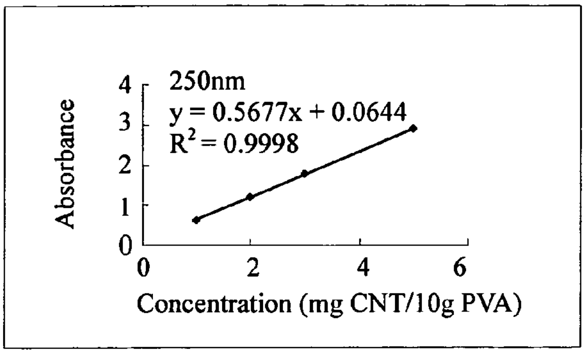


FIG. 5

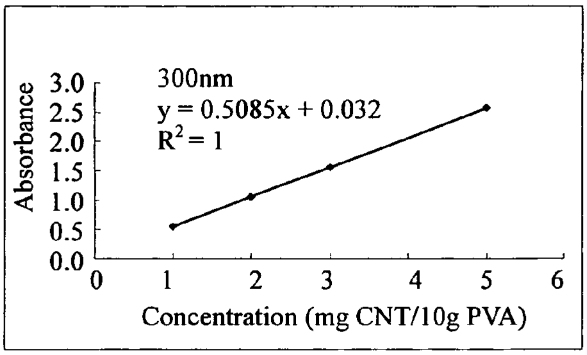


FIG. 6

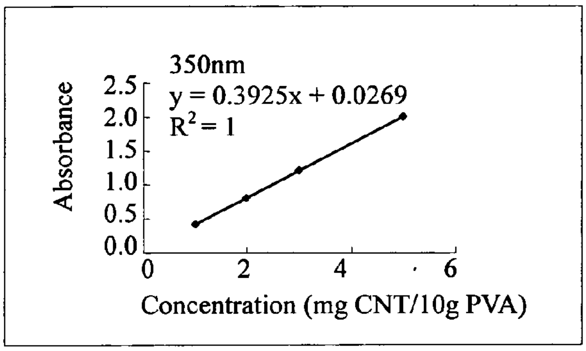


FIG. 7

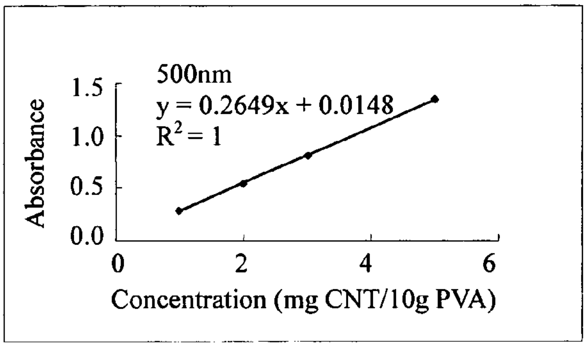


FIG. 8

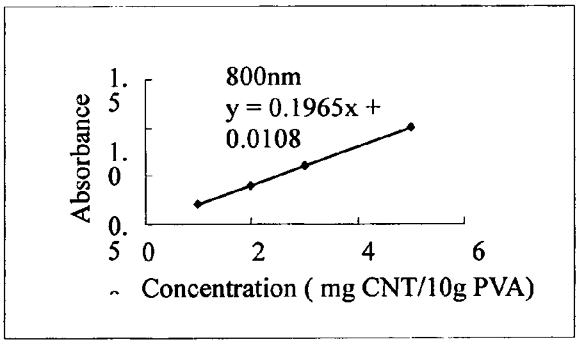


FIG. 9

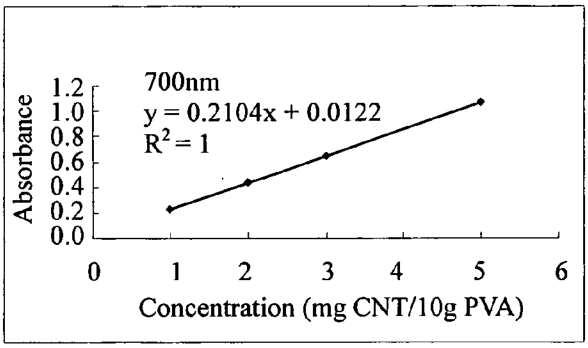


FIG. 10

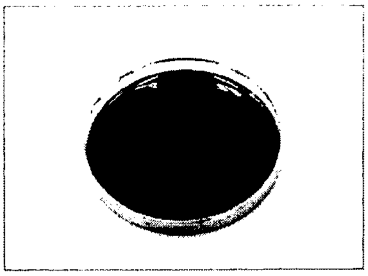

FIG. 11

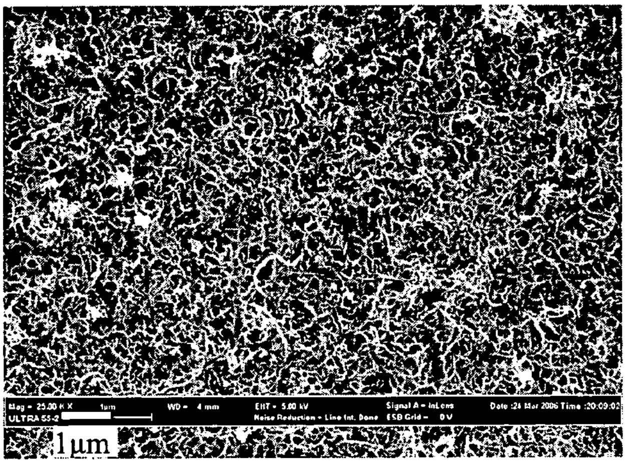


FIG. 12

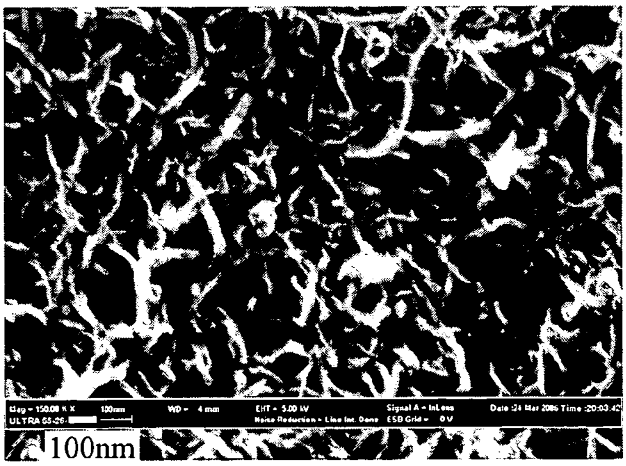


FIG. 13

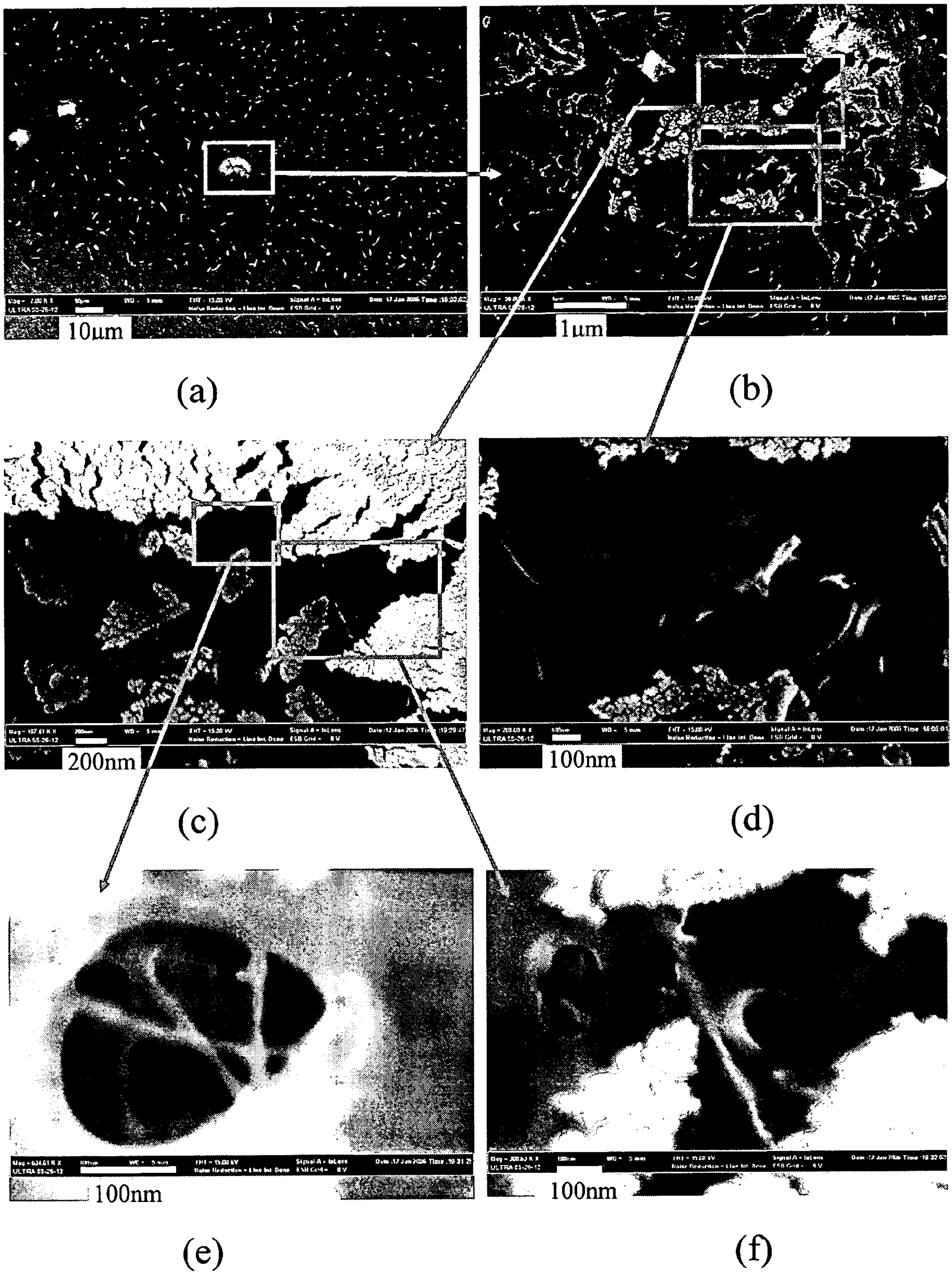


FIG. 14

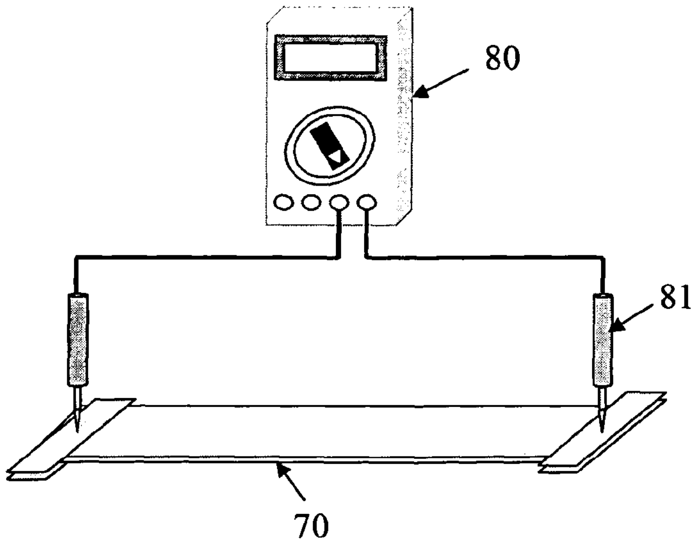
80
81
70

FIG. 15

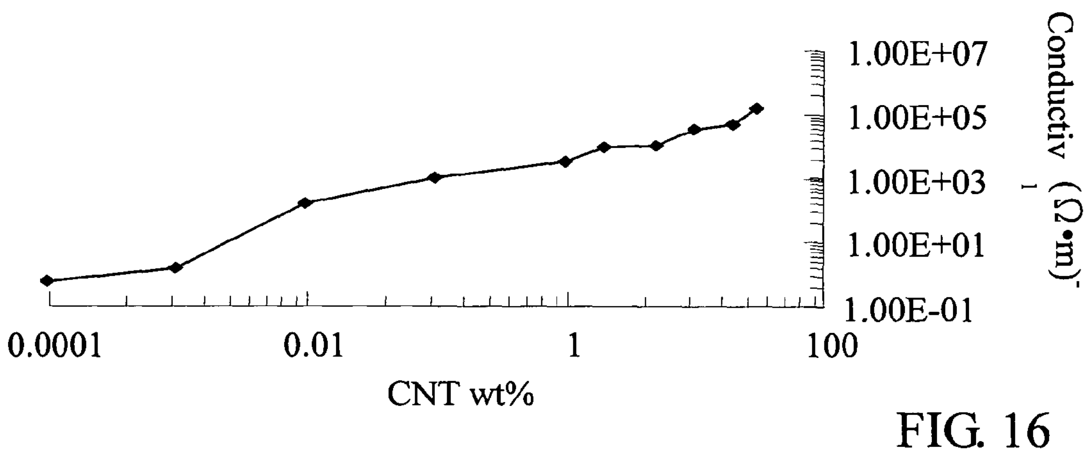
1.00E+07
1.00E+05
1.00E+03
1.00E+01
1.00E-01
Conductiv (Ω•m)-1
0.0001
0.01
1
100
CNT wt%

FIG. 16

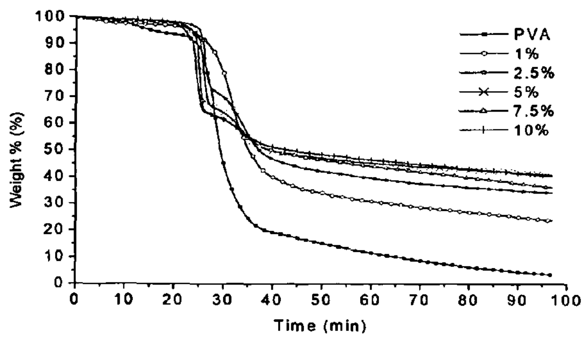


FIG.17

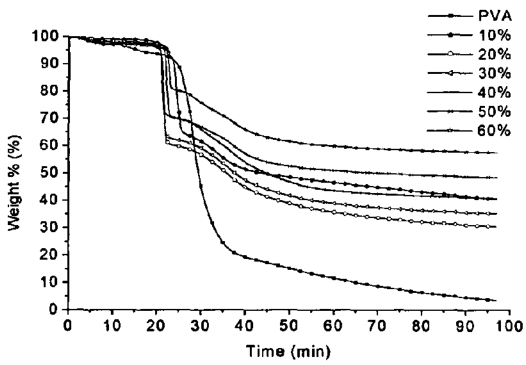


FIG.18

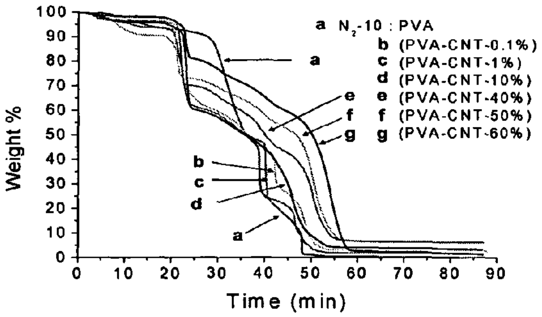


FIG.19

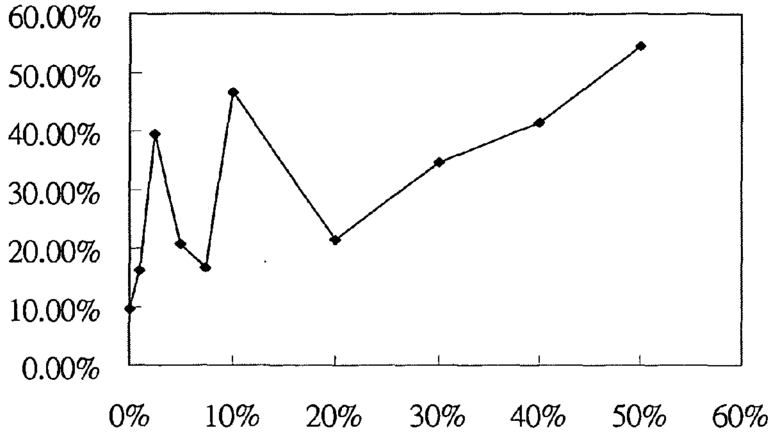


FIG. 20

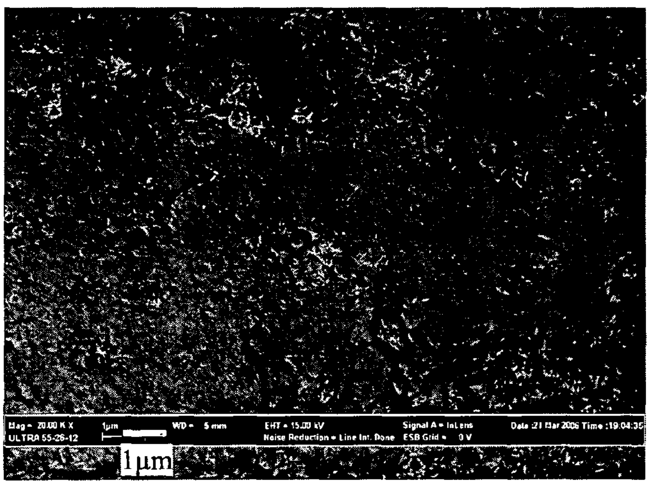


FIG. 21

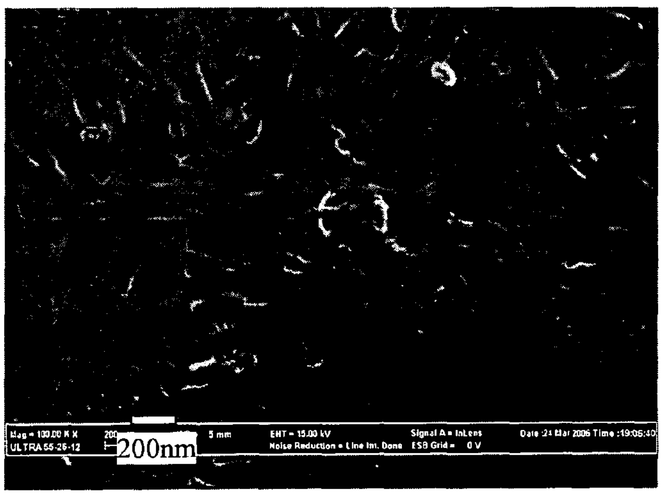


FIG. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7056452 B